# EUROPEAN PATENT APPLICATION

(11) **EP 4 039 109 A1**
(43) Date of publication of application: **10.08.2022**
(21) Application number: 21000262.2
(22) Date of filing: 18.09.2021
(51) Int. Cl.: A24F 40/10

(54) **ATOMIZING ASSEMBLY AND ELECTRONIC CIGARETTE COMPRISING THE SAME**

(30) Priority: 08.02.2021 CN 202110170302; 08.02.2021 CN 202120350217 U; 22.02.2021 CN 202110197776; 22.02.2021 CN 202120389907 U
(71) Applicant: Shenzhen Eigate Technology Co., Ltd., Shenzhen, Guangdong 518103 (CN)
(72) Inventor: Liu, Tuanfang, Shenzhen, Guangdong, 518000 (CN)
(74) Representative: Niburska, Danuta

(57) **Abstract**

An atomizing assembly includes a storage area for accommodating leaked e-liquid and a suction pipe. The suction pipe is disposed in the storage area to suck back the leaked e-liquid.

## Description

The disclosure relates to an atomizing assembly and an electronic cigarette comprising the same.

When e-liquid is atomized, the produced heat causes the parts of the conventional atomizers to expand and results in leakage of the e-liquid. For example, the thermal expansion of the base of the atomizer enlarges the gap between the base and the e-liquid tank, and a small amount of the e-liquid leaks through the gap into the base, and then flows out of the base into the battery, causing a short circuit.

The disclosure provides an atomizing assembly comprising a storage area for accommodating leaked e-liquid and a suction pipe; the suction pipe is disposed in the storage area to suck back the leaked e-liquid.

In a class of this embodiment, the atomizing assembly comprises an airflow channel.

In a class of this embodiment, the suction pipe communicates with the airflow channel.

In a class of this embodiment, the atomizing assembly further comprises an atomization area, and the leaked e-liquid is sucked through the suction pipe into the atomization area.

In a class of this embodiment, the atomization area is disposed in the airflow channel to form a part of the airflow channel or communicates with the airflow channel.

In a class of this embodiment, the atomization area comprises an atomizing element, an oil guide, and/or an atomizing space.

In a class of this embodiment, the suction pipe is a capillary tube or a straw sucking back the e-liquid by a suction force.

In a class of this embodiment, the atomizing assembly further comprises an e-liquid tank and a base disposed in a bottom portion of the e-liquid tank; the storage area is disposed on the base; and a lower end of the suction pipe is closed by the base.

In a class of this embodiment, the atomizing assembly further comprises an atomizing tube; the atomizing tube forms the atomizing space and communicates with the suction pipe.

In a class of this embodiment, the oil guide is disposed around the atomizing element; both the oil guide and the atomizing element are disposed within the atomizing tube.

In a class of this embodiment, a sealing plug is disposed between the base and the e-liquid tank to seal the e-liquid tank; an upper end of the suction pipe is connected to the sealing plug and disposed through the sealing plug into the base.

In a class of this embodiment, a fixed base is disposed on the sealing plug and the atomizing tube is secured to the fixed base.

In a class of this embodiment, the suction pipe is a metal pipe, a glass pipe, or a ceramic pipe.

In a class of this embodiment, a distance exists between the lower end of the suction pipe and an inner bottom surface of the base.

In a class of this embodiment, an e-liquid inlet is disposed on the atomizing tube.

In a class of this embodiment, an air hole is disposed on the sealing plug, the air hole faces the storage area in the base, and the air hole communicates with the atomizing tube.

In a class of this embodiment, a protruding part is disposed on an inner bottom surface of the base, and an air inlet is disposed on the protruding part, and the air inlet communicates with the air hole.

In a class of this embodiment, the atomizing assembly further comprises a silicone sealant disposed on the atomizing tube to seal an e-liquid inlet of the atomizing tube; the silicone sealant extends to the outside of the e-liquid tank; when in use, the silicone sealant is lifted to expose the e-liquid inlet of the atomizing tube.

The disclosure further provides an electronic cigarette comprising the atomizing assembly and a battery assembly.

The following advantages are associated with the atomizing assembly and the electronic cigarette of the disclosure: in the atomizing assembly, the leaked e-liquid is sucked back into the e-liquid tank by the suction pipe, which avoids short circuit and pollution caused by the leaked e-liquid.
FIG. 1 is an exploded view of an electronic cigarette according to one embodiment of the disclosure;
FIG. 2 is an exploded view of an atomizing assembly according to one embodiment of the disclosure;
FIG. 3 is an exploded view of a battery assembly according to one embodiment of the disclosure;
FIG. 4 is a perspective view of an electronic cigarette according to one embodiment of the disclosure; and
FIG. 5 is a cross-sectional view of an electronic cigarette according to one embodiment of the disclosure.

To further illustrate the disclosure, embodiments detailing the atomizing assembly and the electronic cigarette of the disclosure are described below. It should be noted that the following embodiments are intended to describe and not to limit the disclosure.

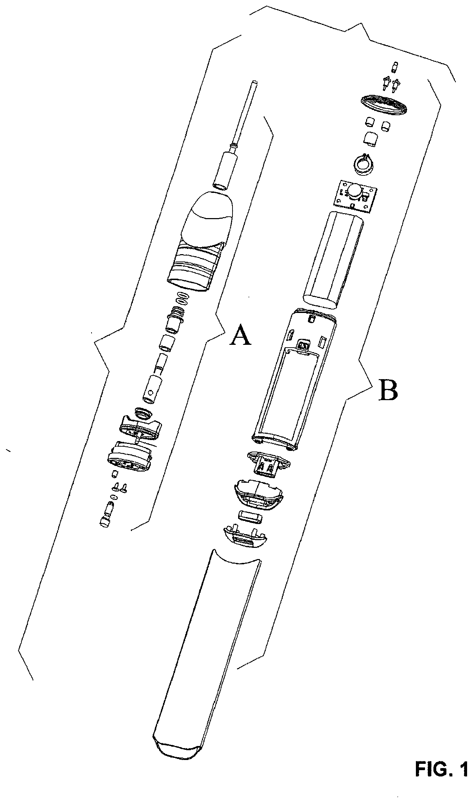

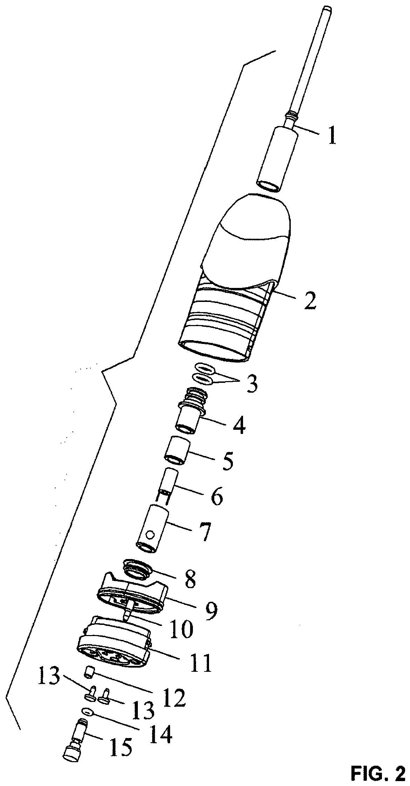

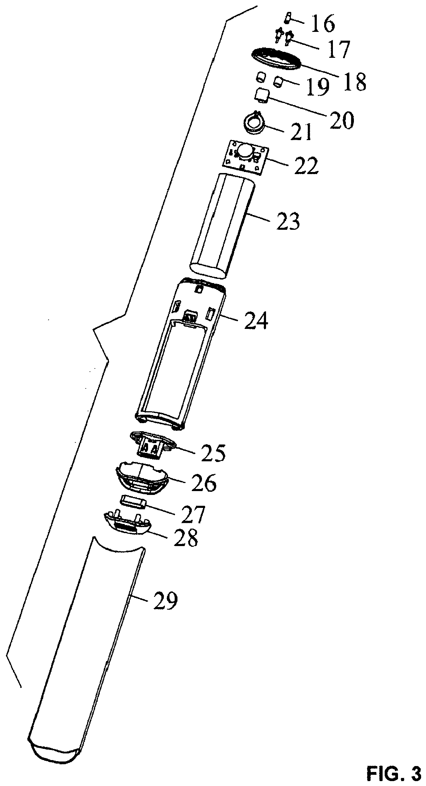

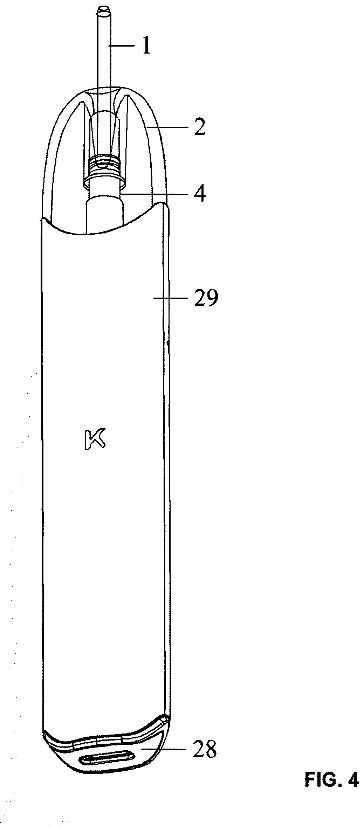

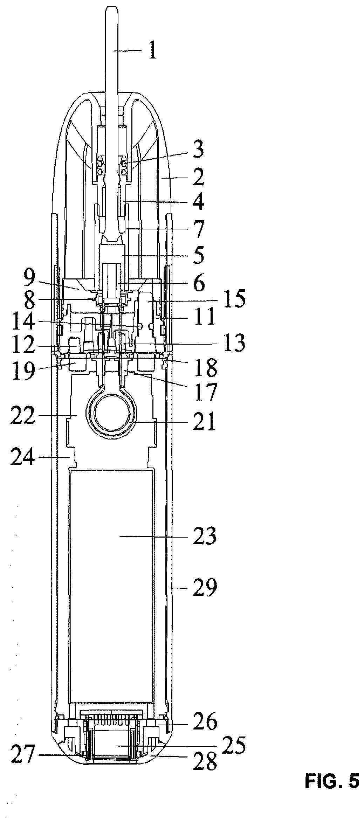

Referring to FIGS. 1-5, an electronic cigarette comprises an atomizing assembly A and a battery assembly B disposed beneath the atomizing assembly A.

The atomizing assembly A comprises a storage area for accommodating leaked e-liquid. A suction pipe 10 is disposed in the storage area to suck back the leaked e-liquid. The leaked e-liquid is then atomized to avoid short circuit and reduce e-liquid waste. The suction pipe 10 is a straw in which the e-liquid is sucked back by a suction force. In certain embodiments, the suction pipe 10 is a capillary tube through which the leaked e-liquid directly leaks out and is then cleaned away. The term "storage area" as used herein refers to a component for storing the leaked e-liquid and may be any component of the electronic cigarette. The component includes, but is not limited to, a base provided with an e-liquid tank, and a sealing component.

The atomizing assembly A comprises an airflow channel for air circulation. In certain embodiments, the suction pipe 10 is a common straw communicating with the airflow channel, and the leaked e-liquid is sucked out of the suction pipe 10 by the suction force exerted by a user. In certain embodiments, the suction pipe 10 is the capillary tube that may not communicate with the airflow channel.

In certain embodiments, the suction pipe 10 directly communicates with the airflow channel to form a part of the airflow channel or is disposed in the airflow channel.

In certain embodiments, the leaked e-liquid is sucked through the suction pipe 10 into an atomization area. The term "atomization area" as used herein refers to an atomizing component or an atomizing space. An atomizing element 6, an oil guide 5, and/or an atomizing space are disposed in the atomization area. Note that the atomization area refers to the atomizing element 6, the oil guide 5, the atomizing space, or a combination thereof. It means that the leaked e-liquid is sucked through the suction pipe 10 into at least one of the atomizing element 6, the oil guide 5, and the atomizing space. The atomizing element 6 includes, but is not limited to, a ceramic atomization core, an electric heating element, and a high-frequency induction heater, which are configured to atomize the e-liquid, herbal oil, etc. The oil guide 5 includes, but is not limited to, an e-liquid conductive cotton, an e-liquid conductive suture, a capillary tube, a flax cotton, a composite cotton, etc., which are configured to introduce the e-liquid and the herbal oil to the atomizing element 6. The term "atomizing space" as used herein refers to a space filled with hot air by which the e-liquid and the herbal oil are atomized.

The suction pipe 10 may directly communicate with the atomization area. The atomization area is disposed in the airflow channel to form a part of the airflow channel or communicates with the airflow channel. Then the suction pipe 10 communicates with the airflow channel, the e-liquid is sucked out of the suction pipe 10 by the airflow and into the atomization area for atomization.

The atomizing element 6 and the oil guide 5 are disposed in the airflow channel or directly communicates with the airflow channel to atomize the leaked e-liquid. The atomizing space forms a part of the airflow channel.

When the suction pipe 10 is the capillary tube, the suction pipe 10 may not communicate with the airflow channel and is disposed at any position to suck back the leaked e-liquid to the atomization area.

Referring to FIGS. 1-5, the atomizing assembly A comprises a silicone sealant 1, an e-liquid tank 2, a first seal 3, an air guide base 4, an oil guide 5, an atomizing element 6, an atomizing tube 7, a fixed base 8, a sealing plug 9, a suction pipe 10, a base 11, a first magnet 12, a pair of electrodes 13, a second seal 14, and an oil plug 15.

The sealing plug 9 is disposed between the base 11 and the e-liquid tank 2 to seal the e-liquid tank 2. The suction pipe 10 is a silicone pipe which is inserted through the sealing plug 9 into the base 11 to suck the e-liquid from the base 11 into the e-liquid tank 2 for reuse. The fixed base 8 is disposed on the sealing plug 9. The atomizing tube 7 is secured to the fixed base 8 to communicate with the suction pipe 10 on the sealing plug 9. The oil guide 5 is disposed around the atomizing element 6. Both the oil guide 5 and the atomizing element 6 are disposed within the atomizing tube 7. The oil guide 5 is configured to absorb the e-liquid and the atomizing element 6 is configured to atomize the e-liquid. The air guide base 4 abuts against on a top surface of the atomizing tube 7 to guide airflow. The first seal 3 is disposed on the air guide base 4 to seal the gap between a top portion of the e-liquid tank 2 and the air guide base 4. The base 11 is pressed into a bottom portion of the e-liquid tank 2 and the sealing plug 9 is disposed between the base 11 and the bottom portion of the e-liquid tank 2. An e-liquid inlet is disposed on the atomizing tube. The silicone sealant 1 is disposed on the atomizing tube 7 to seal an e-liquid inlet of the atomizing tube 7. The silicone sealant 1 extends to the outside of the e-liquid tank 2. The pair of electrodes 13 is pressed into a bottom portion of the base 11 to fix a pin of the atomizing element 6 and conduct electricity. The first magnet 12 abut against the bottom portion of the base 11 and is thus connected to the battery assembly via magnetic attraction. The second seal 14 is disposed on the oil plug 15. Both the second seal 14 and the oil plug 15 are pressed into an injection hole at the bottom portion of the base 11 to block the injection hole and thus prevent leakage of e-liquid.

An air hole is disposed on the sealing plug 9, the air hole faces the storage area in the base11, and the air hole communicates with the atomizing tube 7; a protruding part is disposed on an inner bottom surface of the base 11, and an air inlet is disposed on the protruding part, and the air inlet communicates with the air hole. The suction pipe 10 is a silicone tube; preferably, the silicone tube 10 and the sealing plug 9 are integrally formed to facilitate component preparation. In certain embodiments, the suction pipe 10 is a metal pipe, a glass pipe, a ceramic pipe, etc.

Preferably, a distance exists between a lower end of the suction pipe 10 and an inner bottom surface of the base 11 to prevent blocking the lower end of the suction pipe 10. Note that the method to prevent clogged suction pipe 10 includes, but is not limited to the method described above.

In certain embodiments, the upper end of the suction pipe 10 is inserted through the sealing plug 9 and the lower end of the suction pipe 10 is inserted vertically into the base 11. The lower end of the suction pipe 10 is higher than the inner bottom surface of the base 11 by a specific height. Or the lower end of the suction pipe 10 is bended and the bended end is horizontally attached to the inner bottom surface of the base 11.

The battery assembly B comprises an air guide column 16, an elastic needle 17, a third seal 18, a plurality of second magnets 19, a silicone light guide 20, a silicone pneumatic switch 21, a pneumatic plate 22, a battery 23, a frame 24, a charging board 25, a lampshade 26, a silicone light shield 27, a bottom cover 28, and a housing 29. The third seal 18 is disposed on the frame 24 to prevent air leakage. The elastic needle 17 abuts against a top surface of the frame 24 to conduct electricity. The plurality of second magnets 19 is disposed on the top surface of the frame 24 to attract the plurality of first magnets 12. The air guide column 16 abuts against the top surface of the frame 24 to guide airflow and prevent leakage of the e-liquid. The silicone pneumatic switch 21 is disposed on the pneumatic plate 22. Both the silicone pneumatic switch 21 and the pneumatic plate 22 are secured within the frame 24. The silicone light guide 20 is disposed on the pneumatic plate 22 to gather light from an LED indicator of the pneumatic plate 22. A lead at an output terminal of the charging board 25 is connected to the pneumatic plate 22 and secured to a bottom surface of the frame 24. The battery 23 is secured within the frame 24. A positive electrode and a negative electrode of the battery are separately connected to a lead of the pneumatic plate 22. The lampshade 26 is disposed on the charging board 25 for light transmission. The silicone light shield 27 is disposed in the bottom of the lampshade 26 to prevent light leakage. The bottom cover 28 is secured to the bottom surface of the lampshade 26. The frame 24 is disposed in the housing 29.

## Claims

1. An atomizing assembly, comprising a storage area for accommodating leaked e-liquid and a suction pipe; wherein the suction pipe is disposed in the storage area to suck back the leaked e-liquid.

2. The atomizing assembly of claim 1, wherein the atomizing assembly further comprises an airflow channel.

3. The atomizing assembly of claim 2, wherein the suction pipe communicates with the airflow channel.

4. The atomizing assembly of claim 2, wherein the atomizing assembly further comprises an atomization area, and the leaked e-liquid is sucked through the suction pipe into the atomization area.

5. The atomizing assembly of claim 4, wherein the atomization area is disposed in the airflow channel to form a part of the airflow channel or communicates with the airflow channel.

6. The atomizing assembly of claim 4, wherein the atomization area comprises an atomizing element, an oil guide, and/or an atomizing space.

7. The atomizing assembly of claim 1, wherein the suction pipe is a capillary tube or a straw sucking back the e-liquid by a suction force.

8. The atomizing assembly of claim 6, wherein the atomizing assembly further comprises an e-liquid tank and a base disposed in a bottom portion of the e-liquid tank; the storage area is disposed on the base; and a lower end of the suction pipe is closed by the base.

9. The atomizing assembly of claim 8, wherein the atomizing assembly further comprises an atomizing tube; the atomizing tube forms the atomizing space and communicates with the suction pipe; the oil guide is disposed around the atomizing element; both the oil guide and the atomizing element are disposed within the atomizing tube.

10. The atomizing assembly of claim 9, wherein a sealing plug is disposed between the base and the e-liquid tank to seal the e-liquid tank; an upper end of the suction pipe is connected to the sealing plug and disposed through the sealing plug into the base; and a fixed base is disposed on the sealing plug and the atomizing tube is secured to the fixed base.

11. The atomizing assembly of claim 1, wherein the suction pipe is a metal pipe, a glass pipe, or a ceramic pipe.

12. The atomizing assembly of claim 8, wherein a distance exists between the lower end of the suction pipe and an inner bottom surface of the base.

13. The atomizing assembly of claim 9, wherein an e-liquid inlet is disposed on the atomizing tube.

14. The atomizing assembly of claim 10, wherein an air hole is disposed on the sealing plug; the air hole faces the storage area in the base, and the air hole communicates with the atomizing tube; a protruding part is disposed on an inner bottom surface of the base, and an air inlet is disposed on the protruding part; and the air inlet communicates with the air hole.

15. An electronic cigarette, comprising the atomizing assembly of any one of claims 1-14 and a battery assembly to power the atomizing assembly.
